# EUROPEAN PATENT APPLICATION

(11) **EP 4 678 459 A1**
(43) Date of publication of application: **14.01.2026**
(21) Application number: 23926469.0
(22) Date of filing: 22.12.2023
(51) Int. Cl.: B60L 9/18, B60L 50/60, B60L 58/27, H02P 27/05

(54) **DRIVE DEVICE FOR ROTATING ELECTRICAL MACHINE AND DRIVE DEVICE FOR MOVING BODY**

(30) Priority: 06.03.2023 JP 2023033542
(71) Applicant: AISIN CORPORATION, Kariya-shi, Aichi 448-8650 (JP)
(72) Inventor: CHINEN, Shintaro, Kariya-shi, Aichi 448-8650 (JP); HARADA, Yusuke, Kariya-shi, Aichi 448-8650 (JP); OSHIGE, Masaki, Kariya-shi, Aichi 448-8650 (JP); ISHIZAKI, Yuta, Kariya-shi, Aichi 448-8650 (JP); SUYAMA, Daiki, Kariya-shi, Aichi 448-8650 (JP)
(74) Representative: TBK
(86) International application number: PCT/JP2023/046216
(87) International publication number: WO 2024/185265

(57) **Abstract**

There is disclosed a rotating electrical machine drive device that controls a rotating electrical machine of a wound field type and includes: an inverter circuit that supplies plural-phase AC power to a stator coil wound around a stator core; a full bridge circuit that supplies electric power to a rotor coil wound around a rotor core; and a processing device that controls these circuits. In a stopped state of the moving body, the processing device supplies plural-phase AC power to the stator coil and simultaneously supplies to the rotor coil AC power that reduces or eliminates a reluctance torque generated in the rotor core due to the plural-phase AC power.

## Description

### TECHNICAL FIELD

The present disclosure relates to a rotating electrical machine drive device and a moving body drive device.

### BACKGROUND ART

There is known a technique in which, when oil temperature is equal to or lower than a predetermined temperature in a vehicle stopped state, the oil temperature is raised by driving two rotating electrical machines in such a manner to cancel torques of the rotating electrical machines each other and thereby generating heat.

### CITATIONS LIST

### PATENT LITERATURE

Patent Literature 1: JP 2016-178842 A

### SUMMARY OF INVENTION

### TECHNICAL PROBLEMS

However, although the conventional technique as described above makes it possible to prevent occurrence of significant torque in the vehicle stopped state while increasing heat generation amount by using the two rotating electrical machines, the two rotating electrical machines are required, and it is therefore disadvantageous from the viewpoint of cost and the like.

Therefore, in one aspect, the present disclosure makes it possible to generate a relatively high heat generation amount in a stopped state of a moving body by using a single rotating electrical machine.

### SOLUTIONS TO PROBLEMS

In one aspect, there is provided a rotating electrical machine drive device that controls a rotating electrical machine of a wound field type mounted on a moving body, the rotating electrical machine drive device includes:
an inverter circuit that supplies plural-phase AC power to a stator coil wound around a stator core of the rotating electrical machine;
a full bridge circuit that supplies electric power to a rotor coil wound around a rotor core of the rotating electrical machine; and
a processing device that controls the inverter circuit and the full bridge circuit.

In a stopped state of the moving body, the processing device supplies plural-phase AC power to the stator coil and simultaneously supplies to the rotor coil AC power that reduces or eliminates a reluctance torque generated in the rotor core due to the plural-phase AC power.

### ADVANTAGEOUS EFFECTS OF INVENTION

In one aspect, the present disclosure makes it possible to generate a relatively high heat generation amount in a stopped state of a moving body by using a single rotating electrical machine.

### BRIEF DESCRIPTION OF DRAWINGS

FIG. 1 is a configuration diagram illustrating a vehicle drive system including a drive device for a rotating electrical machine according to the present embodiment.
FIG. 2 is a schematic cross-sectional view illustrating a part of a cross section of a rotating electrical machine.
FIG. 2A is an explanatory diagram of thermal connection between a rotating electrical machine and a high-voltage battery.
FIG. 3A is a diagram illustrating an example of a hardware configuration related to a microcomputer of the present embodiment.
FIG. 3B is a diagram schematically illustrating an example of various functions implemented by the microcomputer of the present embodiment.
FIG. 4 is an explanatory diagram schematically illustrating a flow of an AC current made to flow through a rotor coil via a bridge circuit unit.
FIG. 5 is a flowchart illustrating an example of processing related to the functions illustrated in FIG. 3B and executed by the microcomputer.
FIG. 6 is an explanatory diagram of heat generation control in a vehicle stopped state according to the present embodiment, and is an image diagram of various time-series waveforms during the control.
FIG. 7 is an explanatory diagram of heat generation control in a vehicle stopped state according to a comparative example, and is an image diagram of various time-series waveforms during control.

### DESCRIPTION OF EMBODIMENTS

Hereinafter, each embodiment will be described in detail with reference to the accompanying drawings. Note that dimensional ratios in the drawings are merely examples and are not restrictive, and shapes and the like in the drawings may be partially exaggerated for convenience of description. Furthermore, in the drawings, only some of a plurality of parts having the same attribute may be denoted by reference numerals for the sake of clarity.

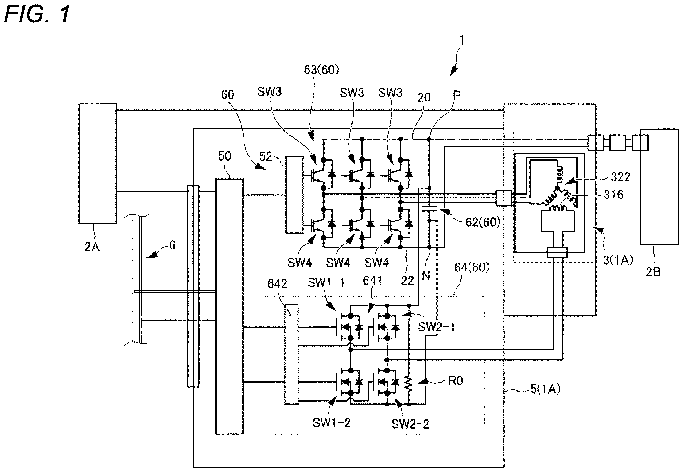

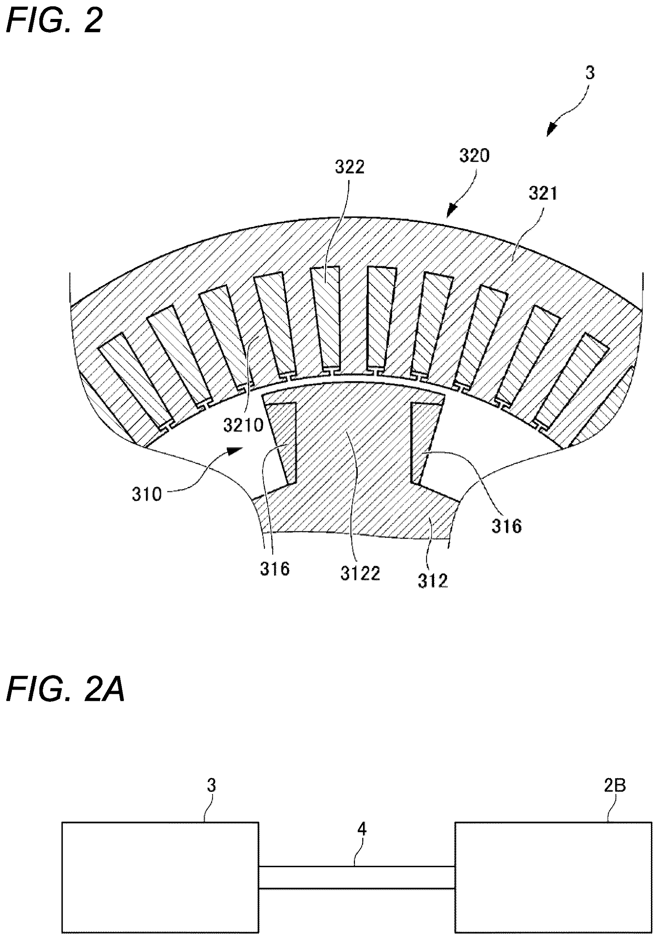

FIG. 1 is a configuration diagram illustrating a vehicle drive system 1 including a drive device 5 for a rotating electrical machine according to the present embodiment. FIG. 2 is a schematic cross-sectional view illustrating a part of a cross section of a rotating electrical machine 3. FIG. 2A is an explanatory diagram of thermal connection between the rotating electrical machine 3 and a high-voltage battery 2B.

The vehicle drive system 1 has a dual power supply configuration including a low-voltage battery 2A and the high-voltage battery 2B, and includes a vehicle drive device 1A. The vehicle drive device 1A includes the rotating electrical machine 3 and the drive device 5.

The low-voltage battery 2A is, for example, a lead battery, and has a rated voltage of 12 V, for example.

The high-voltage battery 2B is, for example, a lithium-ion battery, and has a rated voltage that is significantly higher than the rated voltage of the low-voltage battery 2A and is 40 V or higher, for example. In the present embodiment, for example, the rated voltage of the high-voltage battery 2B is assumed to be 300 V or higher. Note that the high-voltage battery 2B may be in a form of a fuel cell or the like.

The rotating electrical machine 3 is of a wound field type, and includes a rotor 310 in which a rotor coil 316 is wound around a rotor core 312. As illustrated in FIG. 2, the rotor core 312 has teeth portions 3122 protruding radially outward, and a conductor wire forming the rotor coil 316 is wound around the teeth portions 3122. A stator 320 is provided radially outside the rotor 310. As illustrated in FIG. 2, the stator coil 322 is wound around the teeth portions 3210 of a stator core 321.

The drive device 5 includes a microcomputer 50 (hereinafter, referred to as "micom 50") and an electric circuit unit 60.

The micom 50 may be implemented as, for example, an electronic control unit (ECU). The micom 50 is connected to various electronic components (other ECUs and sensors) in the vehicle via a network 6 such as a controller area network (CAN).

The micom 50 receives various commands such as a control command from a host ECU (not illustrated) via the network 6. The micom 50 controls the rotating electrical machine 3 via the electric circuit unit 60, based on the control command. The micom 50 operates based on electric power from the low-voltage battery 2A.

The electric circuit unit 60 includes a smoothing capacitor 62, a power conversion circuit unit 63, and a power feeding circuit unit 64.

The smoothing capacitor 62 is provided between a high potential side line 20 and the low potential side line 22 of the high-voltage battery 2B. A resistor R0 for passive discharge may be connected to both ends of the smoothing capacitor 62.

The power conversion circuit unit 63 is in a form of an inverter, and forms, for example, a three-phase bridge circuit. The power conversion circuit unit 63 supplies three-phase AC power to the stator 320 of the rotating electrical machine 3 under control of the micom 50 to be described later. The power conversion circuit unit 63 is connected between the high potential side line 20 and the low potential side line 22 in parallel to the smoothing capacitor 62. The power conversion circuit unit 63 includes switching elements SW3 of high potential side arms and switching elements SW4 of low potential side arms.

The power feeding circuit unit 64 includes a bridge circuit unit 641 and a drive circuit unit 642.

The bridge circuit unit 641 is connected between the high potential side line 20 and the low potential side line 22 in parallel with the smoothing capacitor 62 and the resistor R0 for passive discharge. The bridge circuit unit 641 is in a form of a full bridge circuit and includes switching elements SW1-1 and SW1-2 and switching elements SW2-1 and SW2-2.

The switching elements SW1-1 and SW1-2 are connected in series between the high potential side line 20 and the low potential side line 22. One end of the rotor coil 316 is connected between the switching elements SW1-1 and SW1-2. In addition, the switching elements SW2-1 and SW2-2 are connected in series between the high potential side line 20 and the low potential side line 22 in parallel to the switching elements SW1-1 and SW1-2. The other end of the rotor coil 316 is connected between the switching elements SW2-1 and SW2-2. Hereinafter, among the switching elements SW1-1, SW1-2, SW2-1, and SW2-2, configurations related to the switching elements SW1-1 and SW2-1 may be attached with an expression "high potential side" for distinction, and configurations related to the switching elements SW1-2 and SW2-2 may be attached with an expression "low potential side".

The switching elements SW1-1, SW1-2, SW2-1, and SW2-2 are switched between on and off states via the drive circuit unit 642. The switching elements SW1-1, SW1-2, SW2-1, and SW2-2 change an energization state of the rotor coil 316 under control of the drive circuit unit 642. The switching elements SW1-1, SW1-2, SW2-1, and SW2-2 are, for example, insulated gate bipolar transistors (IGBTs), but may have another form such as a metal-oxide-semiconductor field-effect transistor (MOSFET).

The drive circuit unit 642 supplies DC power or AC power to the rotor coil 316 by driving gates of the switching elements SW1-1, SW1-2, SW2-1, and SW2-2 on the basis of a control signal from the micom 50.

Next, with reference to FIG. 2A and the subsequent drawings, a characteristic configuration of the present embodiment will be described.

FIG. 2A is an explanatory diagram of the thermal connection between the rotating electrical machine 3 and the high-voltage battery 2B.

In the present embodiment, heat that can be generated by the rotating electrical machine 3 can be used to raise temperature of the high-voltage battery 2B. Specifically, the rotating electrical machine 3 and the high-voltage battery 2B are thermally connected via a thermal connection means 4. The thermal connection means 4 may be any means, but may be implemented by using, for example, a refrigerant. That is, the thermal connection means 4 may be a means in which heat is absorbed in the refrigerant and is moved to the high-voltage battery 2B. In this case, the thermal connection means 4 may be an oil passage through which oil for cooling the rotating electrical machine 3 passes, and may be formed to pass through the high-voltage battery 2B. Alternatively, the thermal connection means 4 may be a high heat-conductive member, a heat pipe, or the like, or may be any combination thereof. In addition, the thermal connection means 4 may be implemented by disposing the rotating electrical machine 3 and the high-voltage battery 2B at a physically close distance to each other. As a result, in a case of a vehicle stopped state after relatively long parking or the like under a low temperature environment, even when the high-voltage battery 2B is very low in temperature, the temperature of the high-voltage battery 2B can be quickly and appropriately raised, and it is possible to enhance characteristics of the high-voltage battery 2B during traveling of the vehicle.

Note that, in the present embodiment, the purpose of using the heat generated in the rotating electrical machine 3 is to raise the temperature of the high-voltage battery 2B, but other purposes may be included instead of or in addition to the temperature raise. For example, the purpose of using the heat generated in the rotating electrical machine 3 may include the temperature rise of the oil itself.

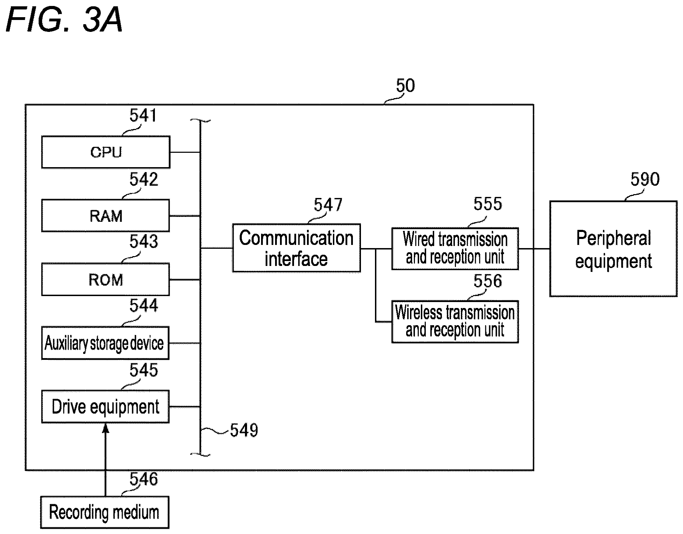

FIG. 3A is a diagram illustrating an example of a hardware configuration related to the micom 50 of the present embodiment. FIG. 3A schematically illustrates peripheral equipment 590 in association with the hardware configuration of the micom 50. The peripheral equipment 590 may include the drive circuit unit 642 illustrated in FIG. 1, the host ECU (not illustrated), and the like.

The micom 50 includes: a central processing unit (CPU) 541, a random access memory (RAM) 542, a read only memory (ROM) 543, an auxiliary storage device 544, a drive equipment 545, a communication interface 547 that are connected via a bus 549; and, in addition, a wired transmission and reception unit 555 and a wireless transmission and reception unit 556 that are connected to the communication interface 547.

The auxiliary storage device 544 is, for example, a hard disk drive (HDD), a solid state drive (SSD), or the like, and is a storage device that stores data related to application software or the like.

The wired transmission and reception unit 555 includes a transmission and reception unit that can communicate using a wired network. The peripheral equipment 590 is connected to the wired transmission and reception unit 555. However, some or all of the peripheral equipment 590 may be connected to the bus 549 or may be connected to the wireless transmission and reception unit 556.

The wireless transmission and reception unit 556 is a transmission and reception unit that can communicate using a wireless network. The wireless network may include a wireless communication network for mobile phones, the Internet, a virtual private network (VPN), a wide area network (WAN), and the like.
Furthermore, the wireless transmission and reception unit 556 may include a near field communication (NFC) unit, a Bluetooth (registered trademark) communication unit, a Wireless-Fidelity (Wi-Fi) transmission and reception unit, an infrared transmission and reception unit, and the like.

Note that the micom 50 may be connectable to a recording medium 546. The recording medium 546 stores a predetermined program. The program stored in the recording medium 546 is installed in the auxiliary storage device 544 or the like of the micom 50 via the drive equipment 545. The installed predetermined program can be executed by the CPU 541 of the micom 50. For example, the recording medium 546 may be a recording medium such as a compact disc (CD)-ROM, a flexible disk, or a magneto-optical disk that optically, electrically, or magnetically records information, or may be a semiconductor memory such as a ROM or a flash memory that electrically records information. Note that the recording medium 546 does not include a carrier wave.

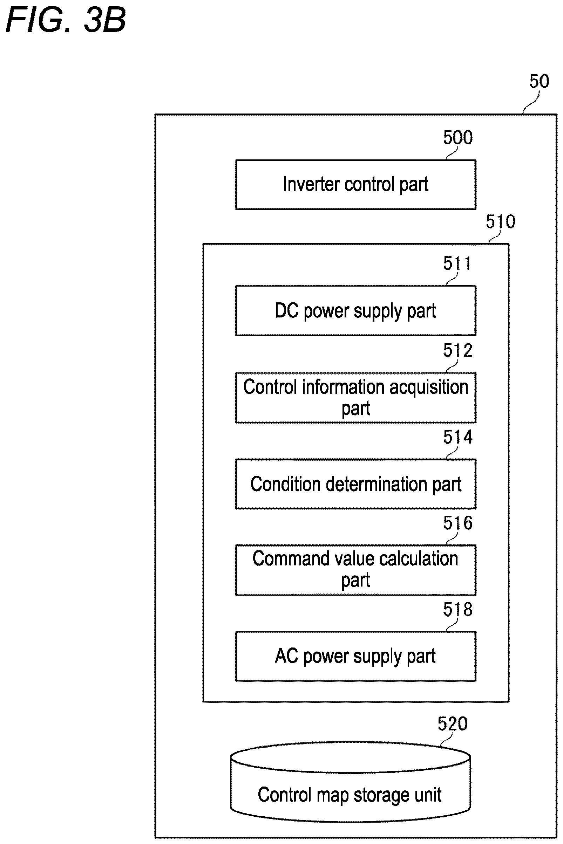

FIG. 3B is a diagram schematically illustrating an example of various functions implemented by the micom 50 of the present embodiment.

The micom 50 includes an inverter control part 500, and a rotor coil energization control part 510, and a control map storage unit 520. Functions of the inverter control part 500 and the rotor coil energization control part 510 can be each implemented, for example, by the CPU 541 illustrated in FIG. 3A executing one or more programs stored in a storage device (for example, the ROM 543). Note that, in a modified example, the inverter control part 500 and the rotor coil energization control part 510 may be implemented by the micom 50 and a CPU core that are different from each other. The control map storage unit 520 can be implemented by, for example, the ROM 543 illustrated in FIG. 3A.

The inverter control part 500 controls energization of the stator coil 322 by controlling on and off states of the switching elements SW3 and SW4 of the power conversion circuit unit 63 via a gate driver circuit 52. At this time, the inverter control part 500 may calculate a control target value on the basis of a control command (for example, a required torque value) from the host ECU (not illustrated), and may control energization of the stator coil 322 so that the control target value is achieved.

Furthermore, in the present embodiment, as will be described later, the inverter control part 500 cooperates with the rotor coil energization control part 510 to perform heat generation control in the vehicle stopped state. Details of the heat generation control in the vehicle stopped state will be described later.

The rotor coil energization control part 510 controls via the drive circuit unit 642 the energization state with respect to the rotor coil 316 of the rotating electrical machine 3. At this time, the inverter control part 500 may calculate a control target value (for example, a target current value) on the basis of a control command (for example, a required torque value) from the host ECU (not illustrated), and may control energization of the rotor coil 316 so that the control target value is achieved.

Furthermore, in the present embodiment, as will be described later, the rotor coil energization control part 510 cooperates with the inverter control part 500 to perform heat generation control in the vehicle stopped state. Details of the heat generation control in the vehicle stopped state will be described later.

In the present embodiment, as illustrated in FIG. 3B, the rotor coil energization control part 510 includes a DC power supply part 511, a control information acquisition part 512, a condition determination part 514, a command value calculation part 516, and an AC power supply part 518.

The DC power supply part 511 functions at a time of normal control other than the heat generation control in the vehicle stopped state. Specifically, the DC power supply part 511 may calculate a control target value on the basis of a control command (for example, a required torque value) from the host ECU (not illustrated), and may supply DC power to the rotor coil 316 so that the control target value is achieved. For example, the DC power supply part 511 controls the switching element SW1-1 on the high potential side and the switching element SW2-2 on the low potential side such that a DC current in accordance with the control target value flows through the rotor coil 316. Specifically, on the basis of a control signal from the micom 50, the DC power supply part 511 drives a gate of the switching element SW1-1 on the high potential side and drives a gate of the switching element SW2-2 on the low potential side via the drive circuit unit 642. Note that the DC power supply part 511 may use only one of a both-arm driving mode and a one-arm driving mode, or may use both of the driving modes properly. For example, in the one-arm driving mode, the DC power supply part 511 may implement one-arm driving in which only one of the switching elements SW1-1 and SW2-2 (for example, the switching element SW1-1 on the high potential side) is turned on and off with a duty in accordance with a current command (a current command with respect to the rotor coil 316). On the other hand, in the both-arm driving mode, the DC power supply part 511 may implement both-arm driving by turning on and off both of the switching elements SW1-1 and SW2-2 with a duty in accordance with a current command (a current command with respect to the rotor coil 316). At this time, in the both-arm driving mode, the DC power supply part 511 may implement the both-arm driving such that the switching elements SW1-1 and SW2-2 are simultaneously turned on (and are simultaneously turned off accordingly). Note that, in the present embodiment, since the bridge circuit unit 641 is a full bridge circuit, the switching element SW1-2 and the switching element SW2-1 may be used also at a time of the normal control to generate a free-wheeling current passing through the rotor coil 316 for retaining magnetic force as disclosed in, for example, JP 2018-161017 A or to improve a control response (for example, for a purpose of adjusting a timing at which a current flowing through the rotor coil 316 is returned to 0, or for other purposes).

The control information acquisition part 512 acquires various types of information used for the heat generation control in the vehicle stopped state. The various types of information to be acquired may include determination information and the like used for processing to determine a heat generation control execution condition by the condition determination part 514 to be described later.

The condition determination part 514 determines whether the heat generation control execution condition related to the heat generation control in the vehicle stopped state is satisfied. The heat generation control execution condition may include a start condition for the heat generation control in the vehicle stopped state and an end condition for the heat generation control in the vehicle stopped state. The heat generation control execution condition may be defined in advance.

The start condition for the heat generation control is arbitrary, but may be satisfied, for example, when the temperature of the high-voltage battery 2B (see FIG. 1) as a heating target is equal to or lower than a start threshold temperature in the vehicle stopped state. The vehicle stopped state may be determined based on vehicle speed information, brake information (for example, master cylinder pressure information), shift position information, and the like. The end condition for the heat generation control is arbitrary but is basically satisfied when the vehicle is no longer in the vehicle stopped state (that is, when traveling is started). However, in this case, there may be a case of shifting to a heat generation control mode during traveling (one element of the normal control). Furthermore, the end condition for the heat generation control may be satisfied, also in the vehicle stopped state, when the start condition for the heat generation control is not satisfied. Alternatively, the end condition for the heat generation control may be satisfied, also in the vehicle stopped state, when an execution time of the heat generation control in the vehicle stopped state exceeds a threshold time or when the temperature of the high-voltage battery 2B (see FIG. 1) as a heating target exceeds an end threshold temperature that is significantly larger than the start threshold temperature.

The command value calculation part 516 calculates (generates) various command values related to the heat generation control in the vehicle stopped state, and outputs the calculated various command values.

In the present embodiment, the command value calculation part 516 generates a drive signal (hereinafter, also referred to as "command signal for stator current") supplied to the power conversion circuit unit 63 via the gate driver circuit 52. The command signal for stator current is a signal for supplying three-phase AC power to the stator coil 322 of the rotating electrical machine 3. A command value related to the command signal for stator current may be constant, and may be changed in accordance with a target heat generation amount. That is, the command value related to the command signal for stator current may be determined in accordance with the target heat generation amount such that the three-phase AC power supplied to the stator coil 322 increases as the target heat generation amount increases.

The command signal for stator current generated by the command value calculation part 516 in this manner may be directly supplied to the power conversion circuit unit 63 or may be supplied to the power conversion circuit unit 63 via the inverter control part 500. Furthermore, the function, in the command value calculation part 516, of generating and/or outputting the command signal for stator current may be implemented by the inverter control part 500. In this case, the heat generation control in the vehicle stopped state may be implemented by the inverter control part 500 and the rotor coil energization control part 510 without cooperating with each other (individually).

Furthermore, in the present embodiment, the command value calculation part 516 generates a drive signal (hereinafter, also referred to as "command signal for rotor current") to be supplied to the bridge circuit unit 641 via the drive circuit unit 642.
The command signal for rotor current is a signal for supplying AC power to the rotor coil 316 of the rotating electrical machine 3. In the present embodiment, the command value related to the command signal for rotor current is determined so as to reduce or eliminate a reluctance torque generated in the rotor 310 (rotor core 312) due to output of the command signal for stator current. Note that the AC power described here is not necessarily electric power based on an AC current having a waveform such as a sine wave, and represents electric power based on an AC current having an arbitrary waveform that has positive and negative components alternately appearing. That is, the command value related to the command signal for rotor current is intended to make a torque ripple caused by the output of the command signal for stator current 0; therefore, a waveform of the rotor current flowing through the rotor coil 316 may include a harmonic component on the basis of the command value related to the command signal for rotor current. Although a sine wave current is applied to the stator coil 322 in the present embodiment, a sine wave current may be applied to the rotor coil 316, and a current of a combination of a sine wave and a harmonic may be applied to the stator coil 322.

Here, the value of the reluctance torque when the three-phase AC is applied to the stator 320 varies depending on a position (rotation angle) of the rotor 310. Therefore, the command value calculation part 516 may acquire position information of the rotor 310 and determine the command value related to the command signal for rotor current in accordance with the position (rotation angle) of the rotor 310. In this case, a control map representing a relationship between the position of the rotor 310 and the command value related to the command signal for rotor current may be prepared in advance. Note that such a control map may be stored in the control map storage unit 520.

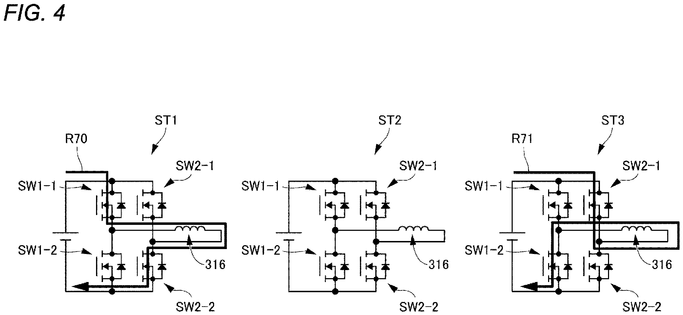

In this manner, the AC power supply part 518 supplies the command signal for rotor current generated by the command value calculation part 516 to the bridge circuit unit 641 via the drive circuit unit 642. FIG. 4 is an explanatory diagram schematically illustrating a flow of an AC current made to flow through the rotor coil 316 via the bridge circuit unit 641. When the command signal for rotor current is supplied to the bridge circuit unit 641 by the AC power supply part 518, an AC current flows through the rotor coil 316 as schematically illustrated in FIG. 4. In the example illustrated in FIG. 4, three typical states ST1 to ST3 are illustrated, and the state ST1 is a state in which the switching element SW1-1 and the switching element SW2-2 are turned on and a positive current is flowing through the rotor coil 316 (see arrow R70). The state ST2 is, for example, a state in which the switching elements SW1-1, SW1-2, SW2-1, and SW2-2 are turned off, and is a state in which the current flowing through the rotor coil 316 is 0. The state ST3 is a state in which the switching element SW1-2 and the switching element SW2-1 are turned on and a negative current flows through the rotor coil 316 (see arrow R71). A state in which an AC current flows through the rotor coil 316 corresponds to a state in which the state ST1 and the state ST3 are alternately changed over via the state ST2. Note that the positive electrode sides of the battery symbols shown in FIG. 4 correspond to the high potential side line 20 (see a connection point P in FIG. 1), and the negative electrode sides correspond to the low potential side line 22 (see a connection point N in FIG. 1).

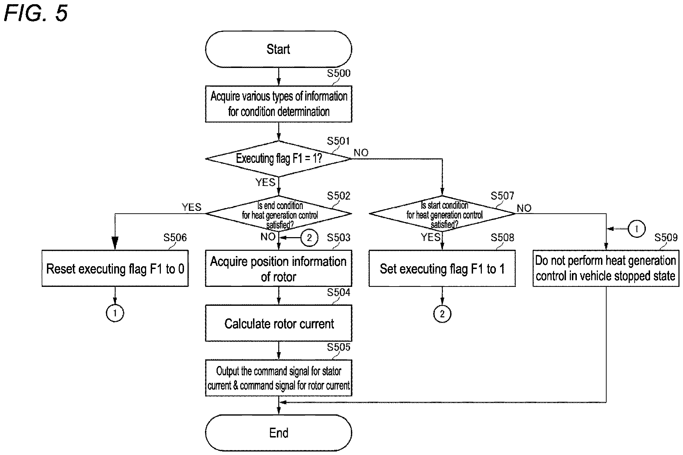

FIG. 5 is a flowchart illustrating an example of processing related to functions illustrated in FIG. 3B and executed by the micom 50. The processing routine illustrated in FIG. 5 may be repeatedly executed at predetermined intervals.

In step S500, the micom 50 acquires various types of information used for determination regarding the start condition and end condition for the heat generation control, such as information indicating the state of the vehicle and temperature information of the high-voltage battery 2B. Note that the information to be acquired may be as described above in relation to the control information acquisition part 512.

In step S501, the micom 50 determines whether an executing flag F1 related to the heat generation control in the vehicle stopped state is "1". The executing flag F1 is a flag that becomes "1" when the heat generation control in the vehicle stopped state is being executed, and becomes "0" in the other states. If the determination result is "YES", the process proceeds to step S502, and if otherwise, the process proceeds to step S507.

In step S502, the micom 50 determines, based on the information obtained in step S500, whether the end condition for the heat generation control is satisfied. The end condition of the heat generation control may be as described above. If the determination result is "YES", the process proceeds to step S506, and if otherwise, the process proceeds to step S503.

In step S503, the micom 50 acquires position information of the rotor 310. Note that the position information of the rotor 310 may be generated by a resolver, an inductive sensor, or the like that may be provided in the rotating electrical machine 3.

In step S504, the micom 50 calculates a current (rotor current) to be flown through the rotor coil 316, on the basis of the position information of the rotor 310 obtained in step S503. Such a calculation may be implemented with reference to the control map described above, or may be implemented by using an equivalent function. Note that, for the calculation of the current (rotor current) to be flown through the rotor coil 316, current information and temperature information of each phase of the stator coil 322 may be used in addition to the position information of the rotor 310.

In step S505, the micom 50 outputs the command signal for stator current and the command signal for rotor current. The command signal for rotor current may be generated based on the calculation result in step S504. Note that the stator current may have a waveform corresponding to a sine wave AC current. At this time, an amplitude (magnitude) of the AC current may be determined in accordance with the target heat generation amount such that the amplitude increases as the target heat generation amount increases and such that the amplitude does not exceed a predetermined upper limit value. In this case, the target heat generation amount may be determined based on the current temperature of the high-voltage battery 2B, the temperature of the rotating electrical machine 3, and the like. When the amplitude (magnitude) of the AC current is changed in accordance with the target heat generation amount, energy saving can be achieved, and the reluctance torque generated in the rotor core 312 due to the stator current (the reluctance torque to be canceled by the AC current flowing through the rotor coil 316) can be prevented from becoming higher than necessary.

In step S506, the micom 50 resets the executing flag F1 to "0". When step S506 has been completed, the process may proceed to step S509.

In step S507, the micom 50 determines, based on the information obtained in step S500, whether the start condition for the heat generation control is satisfied. The start condition for the heat generation control may be as described above. If the determination result is "YES", the process proceeds to step S508 and if otherwise, the process proceeds to step S509.

In step S508, the micom 50 sets the executing flag F1 to "1". In a case of the configuration in which the target heat generation amount is calculated (varies), the target heat generation amount related to the heat generation control in the vehicle stopped state at this time may be calculated at the time when the executing flag F1 is set to "1". When step S508 has been completed, the process may proceed to step S503.

In step S509, the micom 50 does not perform the heat generation control in the vehicle stopped state. In this case, a control (the normal control, for example) different from the heat generation control in the vehicle stopped state may be executed.

With the present embodiment, as described above, it is possible to achieve the heat generation control in the vehicle stopped state by using the single rotating electrical machine 3 instead of using two rotating electrical machines.

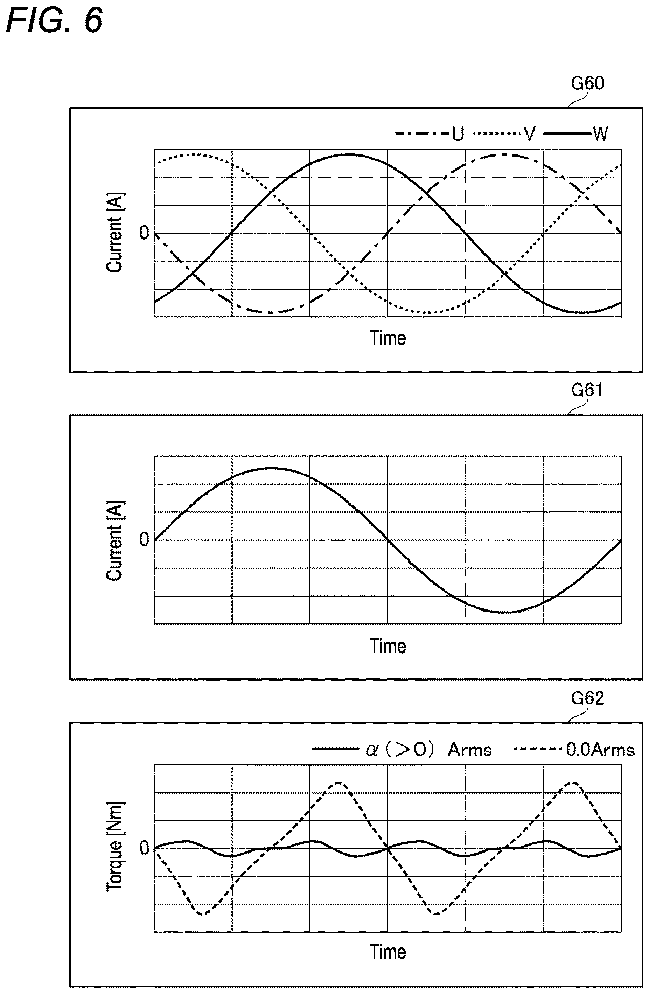

Next, further effects of the present embodiment will be described with reference to FIG. 6 and the subsequent drawings.

FIG. 6 is an explanatory diagram of the heat generation control in the vehicle stopped state in the present embodiment, and is an image diagram of various time-series waveforms during the control. In FIG. 6, the graph G60 illustrates time-series waveforms of a three-phase AC current (stator current) flowing through the stator coil 322 when the vertical axis is current and the horizontal axis is time. The graph G61 illustrates a time-series waveform of the AC current (rotor current) flowing through the rotor coil 316 when the vertical axis is current and the horizontal axis is time. The graph G62 illustrates time-series waveforms of a torque generated by the rotating electrical machine 3 when the vertical axis is torque and the horizontal axis is time. In the graph G62, the time-series waveform when the rotor current is 0 Arms is represented by a dotted line for comparison.

In the graph G62, as can be seen from the time-series waveform (dotted line) when the rotor current is 0 Arms, a significant torque (a reluctance torque generated in the rotor core) is generated by the rotating electrical machine 3 when the three-phase AC current (stator current) is made to flow through the stator coil 322 but no current is made to flow through the rotor coil 316. Such a torque may be uncomfortable for an occupant in the vehicle stopped state and is therefore preferably reduced or eliminated. In this regard, if the magnitude of the three-phase AC current flowing through the stator coil 322 is reduced, the torque generated by the rotating electrical machine 3 can be reduced; however, it becomes difficult to obtain a required heat generation amount (for example, the heat generation amount required to raise the temperature of the high-voltage battery 2B to a desired temperature).

In contrast, with the present embodiment, as can be seen from the time-series waveform when the rotor current is α (> 0) Arms in the graph G62, the torque generated by the rotating electrical machine 3 (the reluctance torque generated in the rotor core) can be reduced or eliminated as compared with the case where the rotor current is 0 Arms. In this way, with the present embodiment, it is possible to reduce or eliminate the torque generated by the rotating electrical machine 3 (the reluctance torque generated in the rotor core) while causing the three-phase AC current (stator current) to flow through the stator coil 322.

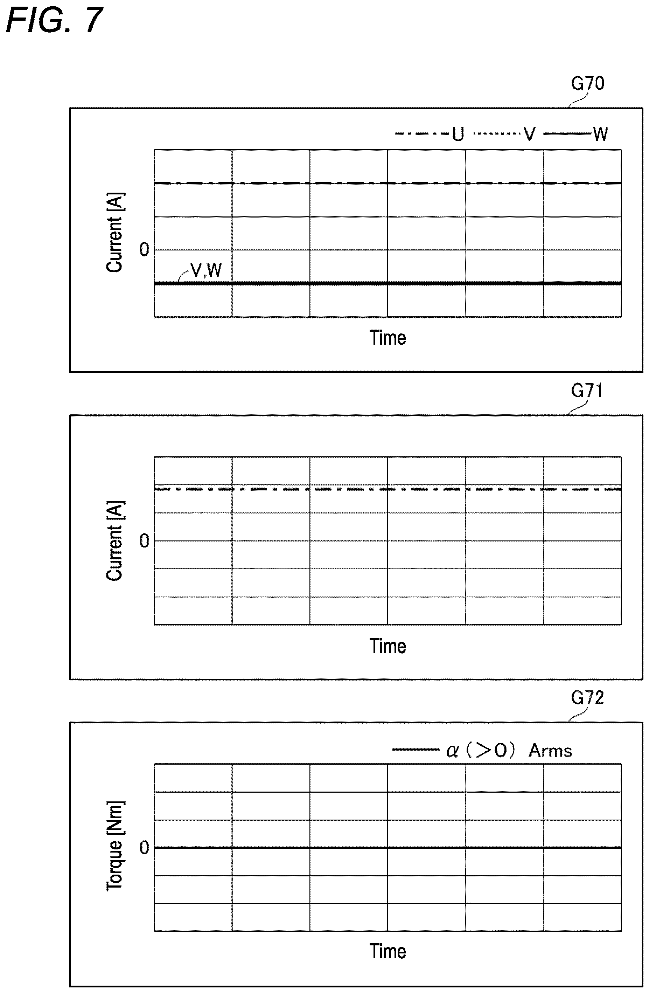

FIG. 7 is an explanatory diagram of the heat generation control in the vehicle stopped state according to a comparative example, and is an image diagram of various time-series waveforms during the control. In FIG. 7, the graphs G70 to G72 are respectively graphs for comparison with the graphs G60 to G62 illustrated in FIG. 6, and the vertical axes and the horizontal axes are respectively the same as those in the graphs G60 to G62.

The comparative example is different from the present embodiment in that, in the comparative example, a combination of DC currents is made to flow through the stator coil 322 so that no torque is generated by the rotating electrical machine 3. Specifically, in the comparative example, a positive DC current is made to flow through only one of the three phases (only for the U-phase, in FIG. 7), and a negative DC current is made to flow through the other two phases. At this time, the magnitude of the negative DC current is, for example, half the magnitude of the positive DC current in FIG. 7 so that the sum of the currents of the three phases becomes 0 (see the graph G70). (note that, as long as the sum is 0, other combinations of distributions are possible, and the combination of the currents is determined in accordance with the rotor position). In such a comparative example, unlike the present embodiment, the current made to flow through the rotor coil 316 has only to be a DC current; therefore, as illustrated in the graph G71, the DC current may be made to flow through the rotor coil 316.

In such a comparative example, heat generation can be achieved while eliminating the torque that can be generated by the rotating electrical machine 3; however, there is a problem that it is difficult to increase the heat generation amount in the stator coil 322. Specifically, in the comparative example, as described above, in the stator coil 322, the magnitude of the DC current that can be applied to two of the three phases (the V-phase and the W-phase are shown, in FIG. 7) is restricted and is half the magnitude of the DC current applied to the remaining one phase (the U-phase, in FIG. 7). For example, assuming that the upper limit of the magnitude of the current that can be made to flow through the stator coil 322 is 400 A DC and 400 Arms AC (thermally equivalent), even if the current of 400 A, which is the upper limit magnitude, is made to flow through the U-phase in the comparative example, the current of -200 A, which is half the upper limit magnitude, is made to flow through each of the V-phase and the W-phase. As a result, in the comparative example, the heat generation amounts in the V-phase and the W-phase are lower than the heat generation amount in the U-phase.

In contrast, in the present embodiment, since the current of the upper limit can flow through each phase of the stator coil 322, the heat generation amount in the stator coil 322 can be maximized. That is, in the above example, the 400 Arms AC can be made to flow through each phase of the stator coil 322, and the heat generation amount can be substantially twice as large as that of the comparative example.

In addition, the present embodiment makes it possible to equalize the heat generation amount in each phase of the stator coil 322. That is, in the comparative example, the heat generation amount in a specific phase (U-phase, in FIG. 7) among the three phases is substantially 4 times the heat generation amount of the other phases; however, in the present embodiment, the heat generation amount in each phase of the stator coil 322 is substantially the same. As a result, in the present embodiment, temperature management of the stator coil 322 is easy.

The heat generation control in the vehicle stopped state according to the comparative example as illustrated in FIG. 7 may be used in combination with the heat generation control in the vehicle stopped state according to the present embodiment. For example, in a case where the target heat generation amount is equal to or greater than a threshold, the heat generation control in the vehicle stopped state according to the present embodiment may be performed, and in a case where the target heat generation amount is less than the threshold, the heat generation control in the vehicle stopped state according to the comparative example may be executed. The heat generation control in the vehicle stopped state according to the comparative example can impose a lower processing load on the micom 50 than the heat generation control in the vehicle stopped state according to the present embodiment. Therefore, according to such a combination, it is possible to cope with the target heat generation amount over a relatively wide range while reducing the processing load of the micom 50.

A detailed description has been given to each embodiment in the above; however, the present invention is not limited to a specific embodiment, and various modifications and changes can be made within the scope described in the claims. Furthermore, all or a plurality of the components of the above-described embodiment can be combined.

For example, although the above-described embodiment relates to an in-vehicle application, the present invention can also be applied to other arbitrary configurations having a heating target object and a rotating electrical machine of a wound field type. For example, with respect to moving bodies such as a ship, an airplane, an elevator, and a construction machine, a heating target object can be heated without moving an object that should move.

### REFERENCE SIGNS LIST

1A: Vehicle drive device, 2B: High-voltage battery (heating target object), 3: Rotating electrical machine, 312: Rotor core, 316: Rotor coil, 321: Stator core, 322: Stator coil, 5: Drive device (rotating electrical machine drive device), 50: Micom (processing device), 63: Power conversion circuit unit (inverter circuit), and 641: Bridge circuit unit (full bridge circuit)

## Claims

1. A rotating electrical machine drive device that controls a rotating electrical machine of a wound field type mounted on a moving body, the rotating electrical machine drive device comprising:
an inverter circuit that supplies plural-phase AC power to a stator coil wound around a stator core of the rotating electrical machine;
a full bridge circuit that supplies electric power to a rotor coil wound around a rotor core of the rotating electrical machine; and
a processing device that controls the inverter circuit and the full bridge circuit,
wherein, in a stopped state of the moving body, the processing device supplies plural-phase AC power to the stator coil and simultaneously supplies to the rotor coil AC power that reduces or eliminates a reluctance torque generated in the rotor core due to the plural-phase AC power.

2. The rotating electrical machine drive device according to claim 1, wherein the rotating electrical machine is thermally connected to a heating target object.

3. The rotating electrical machine drive device according to claim 2, wherein the processing device determines a magnitude of an amplitude related to the plural-phase AC power so that a target heat generation amount is achieved.

4. The rotating electrical machine drive device according to claim 1, wherein, when a target heat generation amount is equal to or greater than a threshold in a stopped state of the moving body, the processing device supplies plural-phase AC power to the stator coil and simultaneously supplies AC power to the rotor coil in such a direction that a reluctance torque generated in the rotor core due to the plural-phase AC power is reduced, and when a target heat generation amount is less than the threshold, the processing device supplies DC power to the stator coil and simultaneously supplies DC power to the rotor coil.

5. A moving body drive device comprising:
a rotating electrical machine of a wound field type mounted on a moving body; and
a rotating electrical machine drive device that controls the rotating electrical machine, the rotating electrical machine drive device including:
an inverter circuit that supplies plural-phase AC power to a stator coil wound around a stator core of the rotating electrical machine;
a full bridge circuit that supplies electric power to a rotor coil wound around a rotor core of the rotating electrical machine; and
a processing device that controls the inverter circuit and the full bridge circuit,
wherein, in a stopped state of the moving body, the processing device supplies plural-phase AC power to the stator coil and simultaneously supplies to the rotor coil AC power that reduces or eliminates a reluctance torque generated in the rotor core due to the plural-phase AC power.
